# EUROPÄISCHE PATENTSCHRIFT

(11) **EP 0 658 973 B1**
(45) Veröffentlichungstag und Bekanntmachung des Hinweises auf die Patenterteilung: **04.03.1998**
(21) Anmeldenummer: 94118728.8
(22) Anmeldetag: 29.11.1994
(51) Int. Cl.: H02P 6/12, G06F 1/24, H02P 7/00

(54) **Elektronisch kommutierter Elektromotor und Verfahren zu seinem Betrieb**
Electronically commutated electric motor and method to control the same
Moteur électrique à commutation électronique et méthode pour le commander

(30) Priorität: 03.12.1993 DE 4341203
(43) Veröffentlichungstag der Anmeldung: 21.06.1995
(73) Patentinhaber: PAPST-MOTOREN GmbH & Co. KG, 78106 St Georgen (DE)
(72) Erfinder: Jeske, Frank, D-78144 Tennenbronn (DE); Rappenecker, Hermann, D-78147 Vöhrenbach (DE)

(56) Entgegenhaltungen:
- EP-A- 0 259 764
- WO-A-89/09957
- MICROCOMPUTER DESIGN AND TROUBLESHOOTING, 1982, INDIANAPOLIS, INDIANA 46268 USA Seiten 165 - 175 EUGENE M. ZUMCHAK 'Reset and interrupt responses'
- MICROCOMPUTER DESIGN AND TROUBLESHOOTING 1982, INDIANAPOLIS, INDIANA 46268 USA, Seiten 326 - 329 EUGENE M. ZUMCHAK 'Reset software'

## Beschreibung

Die Erfindung betrifft einen elektronisch kommutierten Elektromotor mit einem Rotor und mit einem zur Steuerung des Elektromotors dienenden Mikroprozessor, welcher einen Reseteingang aufweist. Sie betrifft ferner ein Verfahren zum Betrieb eines solchen Elektromotors.

Bei derartigen Motoren tritt das Problem auf, daß durch elektrische Störsignale auf den Zuleitungen des Motors der Mikroprozessor gestört werden kann und sich dann ggf. "aufhängt", so daß der Motor zum Stillstand kommt. Dies kann z.B. auftreten durch Bursts transienter Impulsgruppen, oder durch ESD-Signale (ESD = electrostatic discharge), also Signale durch elektrostatische Entladungen, wie sie in Umgebungen mit starken elektrischen Störungen auftreten können.

Man versucht, sich hierbei dadurch zu helfen, daß man die Eingänge eines solchen Mikroprozessors mit entsprechenden Schutzschaltungen versieht, doch ist das aufwendig und führt nicht immer zum gewünschten Erfolg.

Auch ist es aus der WO 89/09957 bekannt, dem Reseteingang eines Mikroprozessors zwei unterschiedliche Arten von Resetsignalen zuzuführen, nämlich
a) ein Power-On-Resetsignal vom Ausgang eines Reglers, und
b) zyklische Resetsignale.
Die Unterscheidung (Diskriminierung) zwischen diesen beiden Arten von Signalen erfolgt über ein Laufzeitglied, über das nur das Power-On-Resetsignal einem zusätzlichen Eingang des Mikroprozessors zugeführt wird, so daß das Auftreten eines Signals sowohl am Reseteingang wie am zusätzlichen Eingang die Erkennung eines Power-On-Resetsignals ermöglicht.

Ferner kennt man aus der EP-A1, 0 259 764 einen dreiphasigen elektronisch kommutierten Elektromotor, dessen drei Motorstränge über eine Vollbrücke mit Strom versorgt werden. Die Vollbrücke wird ihrerseits über einen Ringzähler gesteuert, der Synchronisierimpulse von einem einzigen Rotorstellungssensor erhält. Beim Einschalten des Motors ist dieser Ringzähler außer Tritt, und deshalb werden durch eine optische Markierung Synchronisierimpulse mit erhöhter Amplitude erzeugt, die den Ringzähler bei einer bestimmten Rotorstellung extern auf einen Anfangswert zurückstellen, so daß die Brückenschaltung richtig angesteuert wird.

Es ist eine Aufgabe der Erfindung, einen neuen elektronisch kommutierten Elektromotor, und ein neues Verfahren zum Betrieb desselben, bereitzustellen.

Nach der Erfindung wird diese Aufgabe gelöst durch einen elektronisch kommutierten Elektromotor gemäß dem Patentanspruch 1. Zum Rücksetzen des Mikroprozessors verwendet man also ein vom Motor selbst bei seiner Drehung erzeugtes Resetsignal, welches somit unabhängig ist von irgendwelchen elektrischen Störeinflüssen, und mittels dessen ein zyklisches, definiertes Rücksetzen erfolgt. Dadurch wird ein "Aufhängen" des Mikroprozessors durch Störsignale, wenn es einmal auftritt, quasi augenblicklich wieder beseitigt, und der Mikroprozessor (oder eine sonstige digitale Steuereinrichtung) wird auf definierte Anfangsbedingungen rückgesetzt und kann wieder normal weiterarbeiten. Dabei erfolgt die Unterscheidung eines solchen zyklischen Resetsignals von einem Power-On-Resetsignal, wie es beim Einschalten des Motors auftritt, mittels eines Speicherelements, dessen Zustand durch einen vom Power-On-Resetsignal ausgelösten Resetvorgang veränderbar ist.

Eine weitere Lösung der gestellten Aufgabe ergibt sich durch das Verfahren gemäß Anspruch 11. Man erhält so eine sichere Unterscheidung zwischen einem Power-On-Resetvorgang, wie er beim Einschalten des Motors auftritt, und den zyklischen Resetvorgängen, die durch die Drehung des Motors fortlaufend bewirkt werden.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Ansprüchen. Es zeigt:
- Fig. 1: ein schematisches Blockschaltbild zur Erläuterung des Grundprinzips der Erfindung,
- Fig. 2: Impulsdiagramme zur Erläuterung von Fig. 1,
- Fig. 3: ein Schaltbild einer Anordnung mit einem kollektorlosen Gleichstrommotor, der durch einen Mikroprozessor gesteuert oder in seiner Drehzahl geregelt wird,
- Fig. 4: eine schematische Darstellung der bei einer Drehung des Rotors um 360° el. ablaufenden Vorgänge, und
- Fig. 5: ein Flußdiagramm zur Anordnung nach Fig. 4.
- Fig. 6: ein Schaubild zur Erläuterung des Ports P der Fig. 3,
- Fig. 7: eine Darstellung analog Fig. 4; diese zeigt die Abläufe in einem Elektromotor bei einer Drehung des Rotors um 360° el, wenn für die Steuerung des Elektromotors das Flußdiagramm gemäß Fig. 8 verwendet wird, und
- Fig. 8: ein Flußdiagramm zur Darstellung der Abläufe gemäß Fig. 7, welches zusätzlich noch die laufende Überwachung einer vorgegebenen Mindestdrehzahl zeigt, welche Überwachung beim Anlauf des Elektromotors kurzzeitig außer Kraft gesetzt wird.

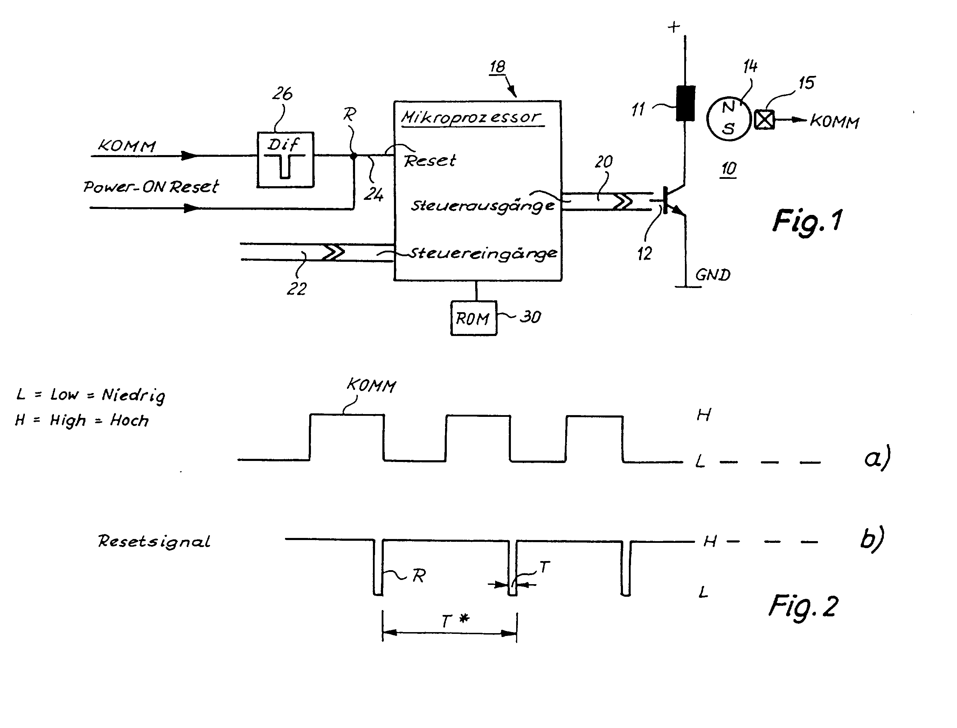

Fig. 1 zeigt ein schematisches Blockschaltbild zur Erläuterung des Grundprinzips der Erfindung. Rechts sind schematisch Grundelemente eines Elektromotors 10 dargestellt, nämlich eine Statorwicklung 11, deren Stromzufuhr z.B. von einem Transistor 12 gesteuert wird, ferner ein Rotor 14 und ein Rotorstellungssensor 15 zur Erzeugung eines Signals KOMM. Der Sensor 15 ist häufig ein Hallgenerator, der vom Magnetfeld des Rotors 14 gesteuert wird, doch ist z.B. die Erfindung in gleicher Weise verwendbar bei einem Motor, der die Rotorstellung - nach dem Sensorless-Prinzip - aus anderen Motordaten ständig neu errechnet. Das Signal KOMM kann z.B. die in Fig. 2a dargestellte Form haben. Ein Resetsignal R kann bei jeder Art von Elektromotor durch einen geeigneten Sensor erzeugt werden, der vom Rotor des Motors bei dessen Drehung beeinflußt wird. Analog gilt dies in gleicher Weise für Linearmotoren.

Der Transistor 12 wird gesteuert von einem Mikroprozessor 18 und ist an dessen Steuerausgänge 20 angeschlossen. Den Steuereingängen 22 dieses Mikroprozessors 18 werden entsprechende Signale zugeführt, z.B. über die Drehzahl, mit der der Elektromotor 10 rotieren soll. Ferner hat der Mikroprozessor 18 einen Reset-Eingang 24, dem ein Resetsignal R (Rückstellsignal) zugeführt werden kann, um den Mikroprozessor 18 auf definierte Anfangsbedingungen rückzusetzen. Die vor einem Resetsignal R aufbereiteten internen Informationen des Mikroprozessors 18 können dabei erhalten bleiben und nach dem Reset weiterverarbeitet werden. Jedoch werden die Zustände rückgesetzt, welche durch irgendwelche Störungen auf den Zuleitungen gestört sein können, z.B. durch den Überlauf eines internen Zählers; beispielhaft kann der-Befehlszähler auf einen vorgegebenen Stand zurückgestellt und neu gestartet werden.

Das Signal KOMM wird, wie dargestellt, einem Differenzierglied 26 zugeführt, das gemäß Fig. 2b die negativen Flanken des Signals KOMM differenziert und in ein Reset-Signal R von kurzer, definierter Zeitdauer T umformt. Dieses Reset-Signal R tritt gemäß Fig. 2b im Betrieb zyklisch in Abständen T* auf, die z.B. bei einem Motor mit einem vierpoligen Rotor 14 einer halben Rotorumdrehung entsprechen, bei einem zweipoligen Rotor 14 (wie dargestellt) einer ganzen Rotorumdrehung, also in Abständen von 360° el.

War vor dem Reset eine Fehlfunktion aufgetreten, so ist der Prozeß nach dem Reset wieder "in Tritt", d.h. solange sich der Rotor 14 dreht und die Resetsignale R erzeugt werden, wird z.B. ein Regelvorgang ständig wieder neu gestartet, so daß Fehler durch transiente Vorgänge schon nach kürzester Zeit wieder aus dem Regelprozeß eliminiert werden.

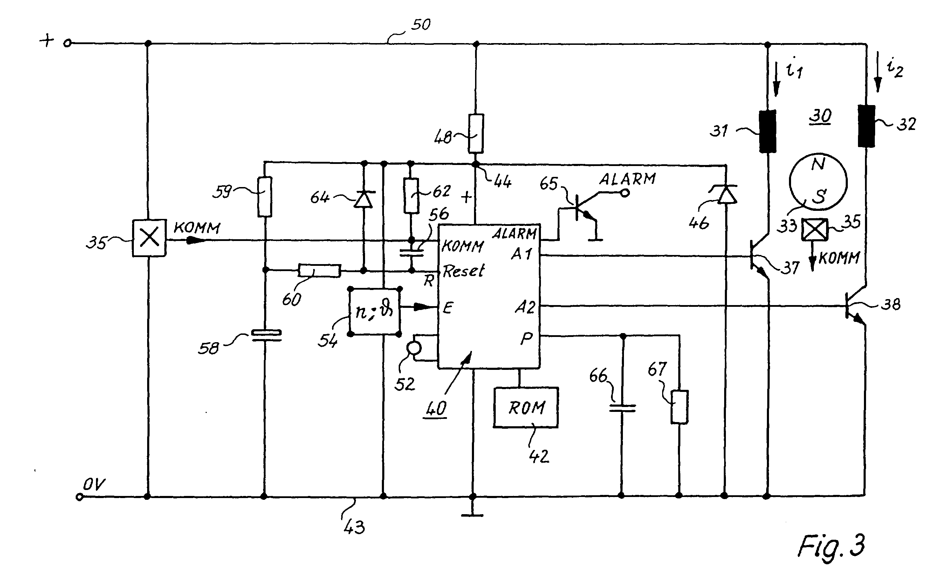

In gleicher Weise kann auch am Eingang 24 ein Power-ON Reset vorgenommen werden, wie in Fig. 1 angedeutet, d.h. eine Grund-Initialisierung des Mikroprozessors 18, die beim erstmaligen Einschalten des Motors 10 erfolgt. Wie dies in bevorzugter Weise geschieht, wird anschließend anhand der Fig. 3 bis 5 erläutert.

Fig. 3 zeigt eine bevorzugte Ausführungsform der Erfindung am Beispiel eines zweisträngigen, zweipulsigen kollektorlosen Gleichstrommotors 30, wie er z.B. aus der DE 23 46 380 C2 bekannt ist, so daß bezüglich Einzelheiten hierauf verwiesen werden kann. Dieser Motor ist selbstverständlich nur ein Beispiel, und die Erfindung eignet sich für alle Arten von elektronisch kommutierten Motoren, hat aber besondere Vorteile in Verbindung mit zweipulsigen kollektorlosen Motoren. (Zu diesen Begriffen wird verwiesen auf asr digest für angewandte Antriebstechnik, 1977, Seiten 27 bis 31.)

Der Elektromotor 30 hat zwei Statorwicklungsstränge 31, 32 und einen permanentmagnetischen Rotor 33, in dessen Nähe ein Rotorstellungssensor 35 angeordnet ist, der im Betrieb ein Signal KOMM abgibt, wie es in Fig. 2a dargestellt ist. Es kann sich z.B. um einen Hall-IC handeln.

Zur Steuerung der Ströme i₁, i₂ in den Wicklungen 31 bzw. 32 sind zwei npn-Leistungstransistoren 37, 38 vorgesehen, die an Ausgänge A1 bzw. A2 eines Mikroprozessors 40 angeschlossen sind, dem ein ROM 42 zugeordnet ist, welches das Steuerprogramm für den Mikroprozessor 40 enthält.

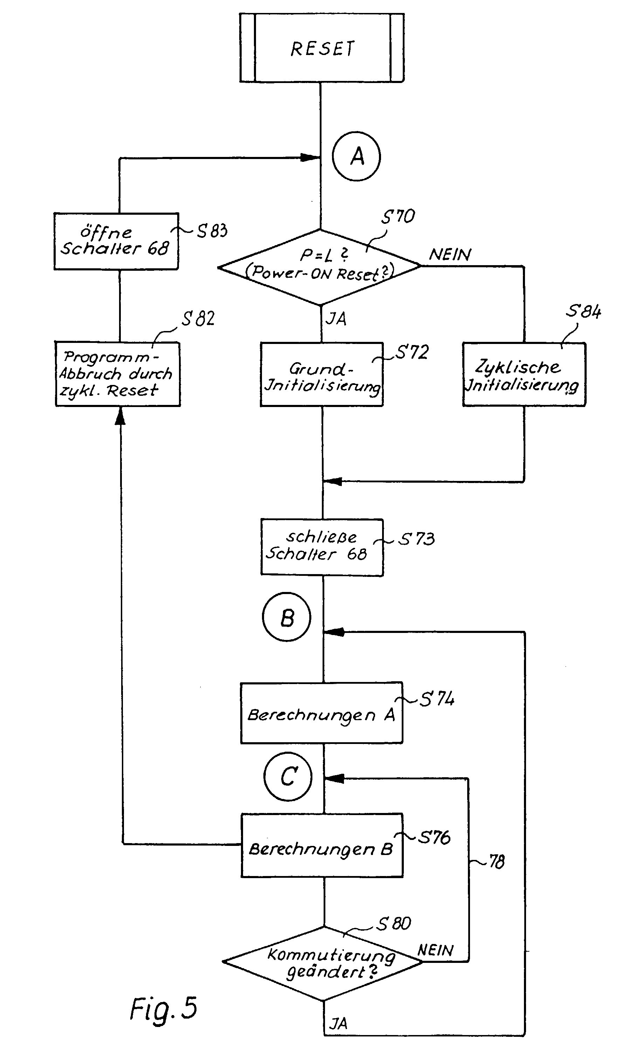

Durch die Signale an den Ausgängen A1, A2 werden die Transistoren 37, 38 alternierend eingeschaltet, d.h. wenn der Transistor 37 eingeschaltet ist und folglich die Wicklung 31 Strom erhält, ist der Transistor 38 ausgeschaltet und folglich ist die Wicklung 32 stromlos. Ist umgekehrt der Transistor 38 eingeschaltet, so daß die Wicklung 32 Strom erhält, so ist der Transistor 37 ausgeschaltet und folglich die Wicklung 31 stromlos. Dies ist nachfolgend in Fig. 5 dargestellt, und es ist in der DE 23 46 380 ausführlich beschrieben. Insbesondere zum Zwecke der Regelung etc. können zeitweilig auch beide Transistoren 31 und 32 stromlos sein.

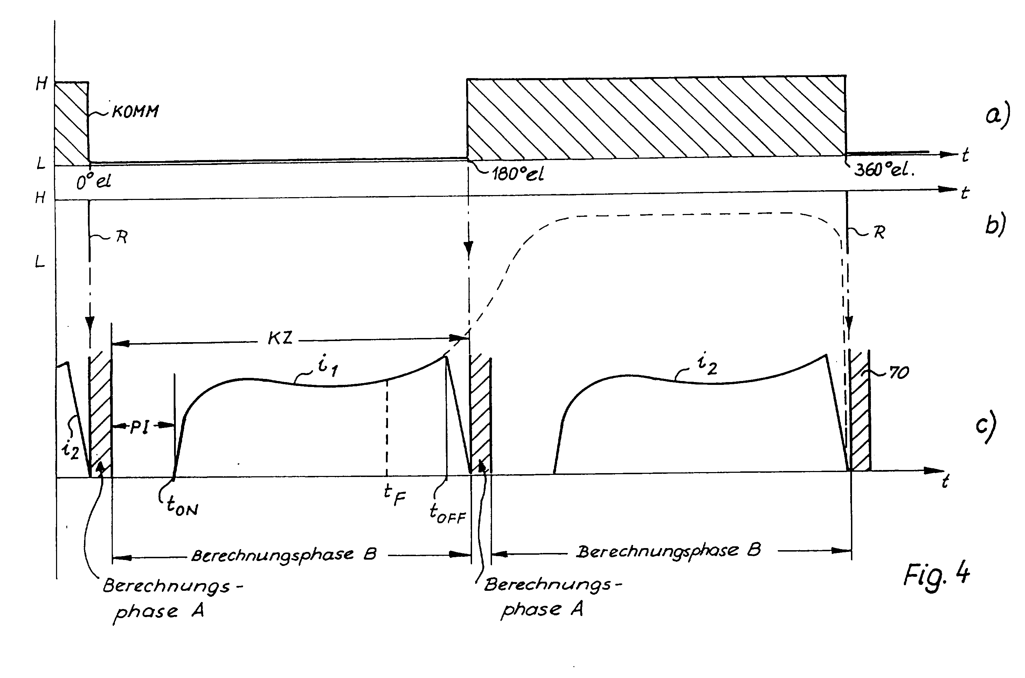

Als Kommutierung bezeichnet man den Vorgang, bei dem der Transistor 37 ausgeschaltet und der Transistor 38 eingeschaltet wird, oder - umgekehrt -, an dem der Transistor 38 ausgeschaltet und der Transistor 37 eingeschaltet wird. Die Kommutierungszeitpunkte sind in Fig. 4 mit 0° el., 180° el, 360° el. etc bezeichnet. Gewöhnlich sind bei dieser speziellen Bauart eines Motors während der Kommutierung kurzzeitig beide Transistoren 37 und 38 gesperrt. Es können aber auch Überlappungen der Ströme auftreten, d.h. daß während der Kommutierung kurzzeitig beide Transistoren 37 und 38 leitend sind.

Die Kommutierung wird durch das Signal KOMM des Sensors 35 gesteuert. Im Rahmen der Erfindung kann dieses Signal auch noch die zusätzliche Funktion haben, den Mikroprozessor 40 zyklisch (periodisch) rückzustellen. Dies wird nachfolgend beschrieben.

Der Mikroprozessor 40 ist, wie dargestellt, an eine negative Leitung 43 angeschlossen, ferner an einen Punkt 44 mit einem durch eine Zenerdiode 46 stabilisierten Potential von z.B. + 6 V.

Der Punkt 44 ist über einen Widerstand 48 mit einer positiven Leitung 50 verbunden.

Ein Taktgeber 52 (Quarz) ist, wie dargestellt, an den Mikroprozessor 40 angeschlossen und bestimmt dessen Taktfrequenz, z.B. 6 MHz. Dem Mikroprozessor 40 werden im Betrieb bestimmte Eingangsdaten zugeführt, und die entsprechenden Eingänge sind hier summarisch mit E bezeichnet, da sie im Rahmen der Erfindung beliebige Signale erhalten können, je nach dem Anwendungsfall. Diese Signale kommen von einem Signalgeber 54, der z.B. Daten über die zu regelnde Drehzahl n oder eine Temperatur theta abgibt.

Das Signal KOMM des Sensors 35 wird einem Eingang KOMM des Mikroprozessors 40 zugeführt, welcher Eingang die Kommutierung an den Zeitpunkten 0° el., 180° el., 360° el. etc. in der bereits erläuterten Weise steuert.

Der Mikroprozessor 40 hat ferner einen Reset-Eingang, und dieser ist über einen Kondensator 56 mit dem Ausgang des Sensors 35 verbunden, welcher Kondensator eine Differenzierung des Signals KOMM bewirkt, so daß am Reset-Eingang die in Fig. 2b dargestellten Resetimpulse R entstehen, wenn sich der Motor dreht. Dadurch wird bei jeder von Hoch (H) nach Tief (L) gehenden Flanke von KOMM über diesen Kondensator 56 der Reset-Eingang kurzzeitig, z.B. während 20 µs, auf L gezogen. (L = Low = tief).

Ferner ist ein größerer Kondensator 58 vorgesehen, z.B. mit 2,2 µF, der über einen Widerstand 59 mit dem Knotenpunkt 44 und über einen Widerstand 60 mit dem Reset-Eingang verbunden ist.

Ein Widerstand 62 wird zwischen dem KOMM-Eingang und dem Knotenpunkt 44 vorgesehen, wenn der Sensor 35 ein Hall-IC ist (sogenannter Pullup-Widerstand des Hall-IC). Eine Diode 64 ist mit ihrer Anode mit dem Reset-Eingang und mit ihrer Kathode mit dem Knotenpunkt 44 verbunden. Wenn sich nämlich das Signal KOMM von L nach H ändert, bewirkt das über den Kondensator 56 einen entsprechenden Anstieg des Potentials am Reset-Eingang, und dieser Anstieg wird durch die Diode 64 "geschluckt". Auch ermöglicht diese Diode ein schnelleres Rücksetzen des Mikroprozessors 40 bei Unterbrechung der Betriebsspannung.

Nach dem Einschalten des Motors, also dem Anlegen einer Betriebsspannung zwischen den Leitungen 50 und 43, lädt sich der Kondensator 58 über die beiden Widerstände 48 und 59 langsam auf. Da der Kondensator 58 zunächst entladen ist, ergibt sich während einer vorgegebenen Zeitspanne nach dem Einschalten, z.B. während 100 ms, ein L-Signal, also ein niedriges Signal, am Reset-Eingang, das zu einem sicheren Power-On Reset führt. Dieser kann, z.B. anhand seiner größeren Zeitdauer, leicht von den zyklischen Resetvorgängen unterschieden werden, welche, wie beschrieben, z.B. nur eine Zeitdauer von 20 µs haben. Beim Power-On Reset erfolgt eine Grund-Initialisierung des Motors, z.B. Abfrage der zu regelnden Drehzahl n am Eingang E, etc..

Nach Aufladung des Kondensators 58 geht das Signal am Reset-Eingang auf H (hoch), womit der Power-On Reset abgeschlossen ist. Nun kann der Programmablauf beginnen, z.B. die Ansteuerung der Transistoren 37, 38, oder bestimmte programmierte Regelfunktionen.

Wie bereits beschrieben, wird bei jeder H/L-Flanke des Signals KOMM über den Kondensator 56 der Reset-Eingang kurzzeitig auf L gezogen, was ein kurzzeitiges zyklisches Reset bewirkt. Nach dem Ende der betreffenden Flanke springt der Reset-Eingang infolge der höheren Kapazität des Kondensators 58 wieder auf H. Der Widerstand 60 entkoppelt die Kondensatoren 56 und 58 voneinander. Wenn der Reset-Eingang wieder auf H ist, kann der Programmablauf im Mikroprozessor 40 weitergehen.

Der Mikroprozessor 40 hat ferner einen Alarmausgang ALARM, an den ein npn-Transistor 65 angeschlossen ist, an den z.B. eine (nicht dargestellte) Klingel angeschlossen sein kann. Das Signal ALARM wird gesetzt, wenn die Drehzahl des Motors 30 im Betrieb unter einen vorgegebenen Wert fällt, z.B. infolge eines Lagerschadens des Motors 30. Beim Einschalten des Motors wird dieses Signal rückgesetzt bzw. gelöscht.

Ferner hat der Mikroprozessor 40-einen Port P. Zwischen diesem und der negativen Leitung 43 sind ein Kondensator 66 und, parallel dazu, ein Widerstand 67 angeschlossen. Der Kondensator 66 dient als dynamisches Speicherelement.

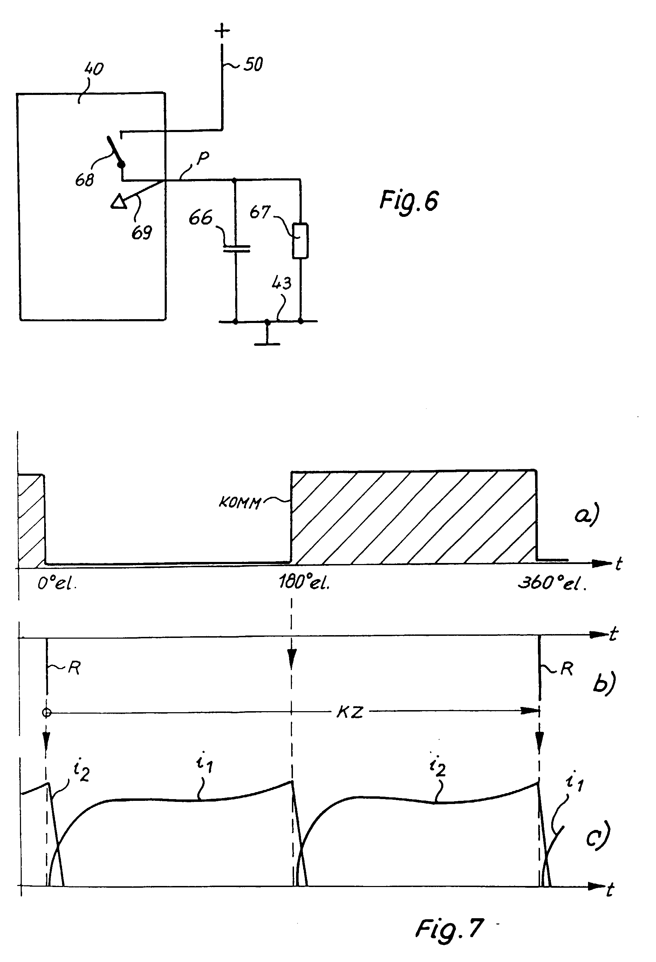

Hierzu wird auf Fig. 6 Bezug genommen. Diese zeigt den Port P. Im Inneren des Mikroprozessors 40 ist ein Schalter (Transistor) 68 vorgesehen, der durch einen Befehl geschlossen oder geöffnet werden kann.

Wird der Schalter 68 geschlossen, so fließt über ihn ein Ladestrom von der Leitung 50 zum Kondensator 66 und lädt diesen auf. Wird der Schalter 68 geöffnet, so entlädt sich der Kondensator 66 über den Widerstand 67.

Ist der Motor 30 ausgeschaltet, so ist der Kondensator 66 entladen, so daß beim Einschalten des Motors eine Abfrage des Ports P (über die Verbindung 69 zur inneren Logik des Prozessors 40) ergibt, daß P = L ist. Dies veranlaßt die Motorsteuerung, einen Power-On Reset durchzuführen.

Nach dem Einschalten des Motors 30 wird der Schalter 68 periodisch geschlossen, so daß der Kondensator 66 immer wieder neu aufgeladen wird. Wenn nun während eines Resetvorgangs der Schalter 68 kurzzeitig geöffnet und der Port P abgefragt wird, so ergibt sich der Wert P = H, denn der Kondensator 66 ist dann geladen und kann sich innerhalb kurzer Pausen von z.B. 0,1 ms nicht sehr stark über den Widerstand 67 entladen. Der Abfragewert P = H bewirkt dann einen zyklischen Reset, und anschließend wird der Schalter 68 wieder geschlossen, so daß die Ladung des Kondensators 66 ständig aufgefrischt (refreshed) wird.

Solange der Motor 30 läuft, bleibt also der Kondensator 66 geladen, es gilt P = H und folglich kann sehr leicht durch die Logik des Mikroprozessors 40 unterschieden werden, ob ein Power-On Reset oder ein zyklischer Reset durchgeführt werden muß.

Fig. 4 zeigt einen bevorzugten Ablauf der Vorgänge im Verlauf der Drehung des Rotors 33 um 360° el, was bei einem zweipoligen Rotor einer vollen Umdrehung entspricht. Bei a) ist das Ausgangssignal KOMM des Sensors 35 dargestellt, das die Kommutierung steuert und das beim Ausführungsbeispiel auch jeweils einmal pro 360° el. ein Resetsignal R (Fig. 4b) liefert. Fig. 4c zeigt die Ströme i₁ und i₂ in den Strängen 31 und 32. Arbeitet der Elektromotor 30 im Bereich seiner Betriebsdrehzahl, so können zwischen diesen Strömen jeweils erhebliche Lücken liegen. Will man, daß der Motor schneller läuft, so muß man diese Lücken verkleinern, also den Wert PI (Fig. 4c) verkleinern, und will man, daß der Motor langsamer läuft, so muß man diese Lücken vergrößern, also den Wert PI größer machen.

Der Wert PI, und ggf. andere Werte für den Betrieb des Motors, werden jeweils in einer Berechnungsphase A berechnet, die sich direkt an einen Kommutierungszeitpunkt anschließt. Bei der als Beispiel dargestellten zweisträngigen, zweipulsigen Motorbauart fällt diese Berechnungsphase A in einen Zeitraum, in dem keiner der Stränge 31, 32 Strom erhält, nämlich in die sogenannte Stromlücke. (In dieser Lücke wird der Rotor 33 durch ein sogenanntes Reluktanzmoment angetrieben). Diese Berechnungsphase A ist wichtig und sollte deshalb nicht durch Resetvorgänge unterbrochen werden, da hier zum Beispiel die Zeitpunkte t_{ON} und t_{OFF} für den nachfolgenden Strang-Strom berechnet werden.

An die Berechnungsphase A schließt sich jeweils eine Berechnungsphase B an, in der anhand der in der Berechnungsphase A errechneten Werte verschiedene Vorgänge ablaufen können:
a) Die Zeitdauer KZ vom Ende der Berechnungsphase A bis zum nächsten Kommutierungszeitpunkt wird gemessen. Dies geschieht z.B. dadurch, daß mehrfach eine Programmschleife vorgegebener Zeitdauer durchlaufen wird und die Zahl der Schleifendurchläufe in einem Kommutierungszähler KZ gezählt wird.
b) Die Zeitdauer PI wird gemessen, und nach ihrem Ablauf wird der Strangstrom eingeschaltet.
c) Die Zeitdauer bis zum Zeitpunkt t_{OFF} wird gemessen und dann der Strangstrom abgeschaltet.
d) Gegebenenfalls wird die Regelabweichung gemessen, und Faktoren eines Drehzahlreglers, z.B. ein Proportional- oder ein Integralfaktor, werden entsprechend angepaßt und jeweils in einem Register gespeichert, damit nachfolgend in der nächsten Berechnungsphase A aus ihnen ein neuer PI-Wert berechnet werden kann.

Wie man nun Fig. 4 entnimmt, wird die Kommutierung zu den Zeitpunkten 0° el, 360° el, etc. durch das zyklische Resetsignal R bewirkt, und zu den Zeitpunkten 180° el, 540° el etc. dadurch, daß das Kommutierungssignal KOMM durch das Programm abgefragt wird.

Hängt sich z.B. das Programm zum Zeitpunkt t_{F} (Fig. 4c) infolge äußerer Störsignale auf, so bleibt der Strom i₁ auch über 180° el hinaus eingeschaltet, wie durch den gestrichelten Verlauf angedeutet, denn da das Programm nicht mehr weiterläuft, kann es auch nicht auf das Signal KOMM reagieren. Der Motor 30 würde dann durch den Strom i₁ gebremst und zum Stillstand kommen.

Dies wird dadurch verhindert, daß zum Zeitpunkt 360° el das Resetsignal R das Programm wieder zurücksetzt, z.B. indem der Befehlszähler auf 0 zurückgesetzt und neu gestartet wird. Dadurch wird der Strom i₁ unterbrochen, und das Programm läuft wieder normal weiter.

Im Normalfall hängt sich selbstverständlich das Programm nicht auf, und in diesem Fall wird einfach das laufende Programm durch ein Signal R innerhalb der Berechnungsphase B in einem seiner Schleifendurchläufe unterbrochen, wodurch die Register, z.B. für den Proportionalfaktor P einer Regelung, oder für den Wert KZ, auf dem erreichten Wert stehenbleiben, welcher Wert dann anschließend in der Berechnungsphase A weiterverwendet werden kann.

Ein Fehler kann sich also nur vom Fehlerzeitpunkt t_{F} bis zum nächsten Resetsignal R fortpflanzen, und dann setzt wieder der normale Motorbetrieb und der normale Ablauf des Programms ein. Dieses Resetsignal R kann selbstverständlich auch von einem separaten Sensor stammen, oder aus internen Daten des Motors berechnet werden, aber die dargestellte Lösung ist zweifellos besonders vorteilhaft und zuverlässig, und sie bewirkt eine automatische Kopplung der Signalabläufe und Rechenvorgänge durch das System, also den sich drehenden Rotor 33.

Fig. 5 zeigt in einer Prinzipdarstellung ein Flußdiagramm, wie es dem Ablauf gemäß Fig. 4 zugrundeliegen kann.

Wird der Motor 30 eingeschaltet, was der Stelle A des Flußdiagramms entspricht, so liegt ein Rückstellsignal am Eingang RESET des Mikroprozessors 40, denn der Kondensator 58 (Fig. 3) ist beim Einschalten entladen, so daß der Eingang RESET auf L liegt. Nun wird in einem Schritt S70 geprüft, ob es sich um ein Power-On Reset handelt. Dies ist beim Einschalten der Fall, d.h. auch der Kondensator 66 (Fig. 3 und 6) ist beim Einschalten entladen, so daß P = L ist und im Schritt S72 eine Grund-Initialisierung erfolgt,

Im anschließenden Schritt S73 wird der Schalter 68 (Fig. 6) geschlossen und der Kondensator 66 wird folglich geladen.

Das Programm geht dann zum Schritt S74 und beginnt auf Grund'der Werte aus Schritt S72 die Berechnungsphase A, also z.B. die Berechnung des Wertes PI der Fig. 4c. Dies geschieht also etwa im Drehstellungsbereich 0° el ... 10° el oder 180° el ... 190° el des Rotors, also zu einem Zeitpunkt, nachdem das Resetsignal R erzeugt worden ist.

Nach Abschluß der Berechnungsphase A (Schritt S74) geht nun das Programm weiter zum Schritt S76, also der Berechnungsphase B, die anhand von Fig. 4 bereits ausführlich erläutert wurde, wobei derjenige Strom i₁ oder i₂ eingeschaltet wird, der dem augenblicklichen Kommutierungssignal KOMM entspricht, also bei KOMM = L der Strom i₁, und bei KOMM = H der Strom i₂.

Die Berechnungsphase B ist Teil einer Schleife 78 und wird deshalb mehrfach durchlaufen, d.h. jedesmal, wenn der Schritt S76 durchlaufen ist, wird in einem Schritt S80 geprüft, ob sich das Signal KOMM geändert hat. Ist dies nicht der Fall, so geht das Programm zurück zur Programmstelle C und durchläuft erneut den Schritt S76.

Jeder Schleifendurchlauf hat eine zuvor festgelegte Zeitdauer, z.B. 125 µs. Die Zahl der Schleifendurchläufe wird in einem Zähler KZ gezählt, und dies liefert den in Fig. 4c eingezeichneten Wert KZ, der also ein Maß für den zeitlichen Abstand zwischen zwei Kommutierungsstellen ist und der etwa umgekehrt proportional zur Drehzahl des Motors ist.

Kommt man nun zu einer Kommutierungsstelle, also in Fig. 4 den Rotorstellungen 0° el, 180° el, 360° el, etc., so gibt es zwei Möglichkeiten:
a) An den Stellen 180° el, 540° el etc. wird im Schritt S80 festgestellt, daß sich das Signal KOMM von L nach H geändert hat, und das Programm geht zurück zur Stelle B. Es führt dann als erstes in S74 wieder die Berechnungsphase A aus, und geht anschließend wieder in die Schleife 78, wobei der Strom i₂ eingeschaltet wird, und durchläuft diese Schleife mehrfach (Berechnungsphase B).
b) An den Stellen 0° el, 360° el etc. tritt das Resetsignal R am Eingang RESET des Mikroprozessors 40 auf, und dieses bewirkt im Schritt S82 einen Abbruch der Berechnungsphase B an irgendeiner Stelle eines Schleifendurchlaufs 78, und einen Rücksprung zur Stelle A des Programms. Dabei wird durch den Resetvorgang im Schritt S83 der Schalter 68 (Fig. 6) geöffnet, so daß die Ladung des Kondensators 66 kurzzeitig unterbrochen wird.

Bei der Variante b), also dem durch das System (die Drehung des Rotors 33) verursachten zyklischen Resetvorgang, gelangt das Programm nun wieder zum Schritt S70, wo aber diesmal festgestellt wird, daß es sich nicht um einen Power-On Reset handelt, denn der Kondensator 66 (Fig. 3 und 6) ist jetzt geladen, und folglich . gilt P = H Deshalb wird hier beim Schritt S84 eine zyklische Initialisierung durchgeführt, bei der vor allem der Kommutierungszähler auf einen vorgegebenen Wert zurückgestellt wird, z.B. den Wert 0, und das Programm neu gestartet wird, wobei je nach den Erfordernissen auch bestimmte Register rückgestellt werden können. Dies ist von Fall zu Fall verschieden und Sache des Programmierers. Z.B. kann die einzuhaltende Solldrehzahl oder die Mindestdrehzahl (für ALARM) erneut dekodiert werden.

Nach dieser zyklischen Initialisierung im Schritt S84 befindet sich das Programm wieder an der Stelle B, und der bereits beschriebene Ablauf mit der Berechnungsphase A (S74) und der Berechnungsphase B (Schleife 78) beginnt von neuem, wobei in diesem Fall der Strom i₁ eingeschaltet wird.

Wie man Fig. 4 entnimmt, kann man z.B. bei 0° el einen zyklischen Resetvorgang machen, bei 180° el die Kommutierung direkt durch Abfrage des Signals KOMM (mittels des Programmschritts S80) bewirken, anschließend wieder bei 360° el einen zyklischen Reset durchführen, etc., wobei die zyklischen Resetvorgänge bei diesem Ausführungsbeispiel gleichfalls eine Kommutierung bewirken: Die Kommutierung von i₂ zu i₁ (bei 0° el, 360° el etc.) erfolgt mittels eines zyklischen Resetvorgangs, und die Umschaltung von i₁ zu i₂, z.B. bei 180° el, erfolgt durch Programmabfrage des Signals KOMM im Schritt S80.

Naturgemäß kann es genügen, pro Rotorumdrehung einen einzigen Resetvorgang durchzuführen, der durch die Drehung des Rotors bewirkt wird, oder nur bei jeder 5. Umdrehung, aber da die dargestellte Version sehr praktisch und leicht zu realisieren ist, wird es im allgemeinen vorteilhaft sein, jeden zweiten Kommutierungsvorgang in Form eines zyklischen Resetvorgangs zu realisieren, denn dann werden Fehler im Programmablauf schon nach kurzer Zeit wieder behoben und durch einen normalen Programmablauf ersetzt. Dadurch ergibt sich ein sehr zuverlässiger und dynamisch günstiger Lauf eines erfindungsgemäß ausgebildeten Motors.

Die verbesserte Dynamik des Motors ergibt sich dadurch, daß das Resetsignal R einen sofortigen Austritt aus der Programmschleife 78 bewirkt. Es ersetzt also die Abfrage im Schritt S80, ob die Kommutierung geändert wurde.

Während die Abfrage des Schrittes S80 gewöhnlich mit einer zeitlichen Verzögerung erfolgt, denn vor ihr muß u.U. die gesamte Schleife 78 durchlaufen werden, so daß diese Abfrage einen erheblichen zeitlichen Abstand vom Kommutierungszeitpunkt haben kann, ist der Zeitpunkt des Resetsignals R genau definiert, d.h. dieses Signal bewirkt eine zeitlich genauere Kommutierung und deshalb einen dynamisch besseren Lauf des Motors, was sich z.B. in einer verbesserten Laufruhe ausdrückt. Es kann deshalb vorteilhaft sein, auch an den Rotorstellungen 180° el, 540° el etc. ein Resetsignal R zu erzeugen und auch dort einen zyklischen Resetvorgang durchzuführen.

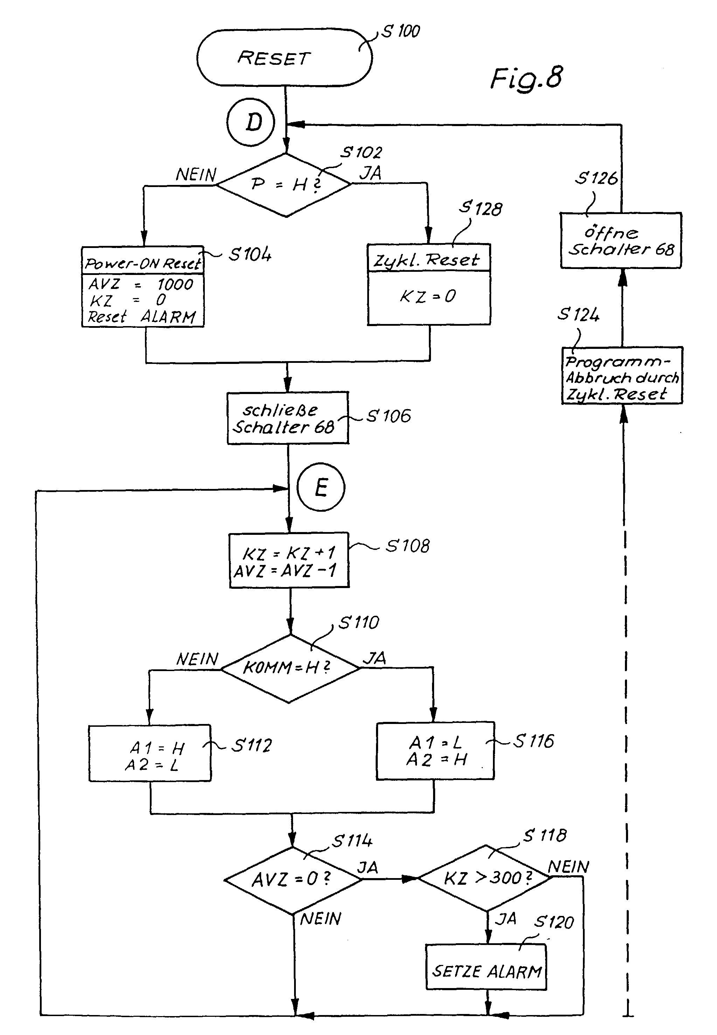

Die Fig. 7 und 8 zeigen ein detailliertes Ausführungsbeispiel, das sich ebenfalls auf die Schaltung nach Fig. 3 und 6 bezieht.

Fig. 7a zeigt das Signal KOMM am Ausgang des Sensors 35, Fig. 7b das Resetsignal R. Diese Signale stimmen mit Fig. 4a und Fig. 4b überein.

Fig. 7c zeigt den Verlauf der Ströme i₁ und i₂ in den Strängen 31 bzw. 32 des Motors 30. Diese Ströme überlappen sich hier etwas, denn bei einer Kommutierung wird hier jeweils der Strom im einen Strang abgeschaltet und praktisch gleichzeitig wird der Strom im anderen Strang eingeschaltet.

Der Kommutierungszähler KZ (im Mikroprozessor 40) mißt hier die Größe KZ zwischen zwei aufeinanderfolgenden Resetsignalen R, wie in Fig. 7c dargestellt. Dies entspricht also einer Rotordrehung von 360° el.

Wie Fig. 8 zeigt, erfolgt hier beim Einschalten des Motors 30 der Resetvorgang S100. Dabei wird im Schritt S102 abgefragt, ob P = H ist (vgl. die Erläuterungen zu Fig. 6). Beim Einschalten des Motors 30 ist P = L, da der Kondensator 66 entladen ist, und deshalb geht das Programm zum Schritt S104 und führt einen Power-On Reset durch, wobei ein Zähler AVZ auf 1000 gesetzt wird. Dieser bewirkt eine Alarmverzögerung beim Einschalten des Motors, d.h. innerhalb einer vorgegebenen Zeitspanne ab dem Einschalten des Motors 30 kann das Signal ALARM nicht ausgelöst werden. Deshalb wird auch das Signal ALARM auf L gesetzt. Ferner wird der Kommutierungszähler KZ auf 0 gesetzt.

Anschließend wird im Schritt S106 der Schalter 68 geschlossen, so daß der Kondensator 66 (Fig. 3 und 6) geladen wird. Danach geht das Programm zum Schritt S108, wo der Kommutierungszähler um eins heraufgezählt wird und der Zähler AVZ um eins heruntergezählt wird. (AVZ kann nur bis zum Wert 0 heruntergezählt werden).

Beim Schritt S110 wird das Signal KOMM abgefragt. Bei der Stellung 0° el. (Fig. 7) ist KOMM = L, und deshalb wird im Schritt S112 der Wert A1 = H gesetzt, d.h. der Transistor 37 (Fig. 3) wird eingeschaltet, und der Wert A2 wird auf L gesetzt, d.h. der Transistor 38 bleibt ausgeschaltet.

Beim Schritt S114 wird geprüft, ob AVZ = 0 ist. Falls Nein, geht das Programm zurück zur Stelle E, und die Schritte S108, S110, S112 und S114 werden mehrfach durchlaufen, wobei jedesmal der Kommutierungszähler KZ hinaufgezählt wird und AVZ heruntergezählt wird. Da die Schleifendurchläufe gleich lang sind und z.B. jeweils 125 µs dauern, mißt der Kommutierungszähler KZ den zeitlichen Abstand zwischen zwei Resetsignalen R.

Ändert sich bei der Drehstellung 180° el das Signal KOMM von L auf H, so geht das Programm zum Schritt S116, d.h. der Transistor 37 wird ausgeschaltet und der Transistor 38 wird eingeschaltet, so daß der Strom i₁ unterbrochen wird, und der Strom i₂ zu fließen beginnt.

Ist nach einigen Umdrehungen des Rotors 33 der Zählerstand AVZ = 0 erreicht, so geht das Programm zum Schritt S118 und prüft, ob der Zählerstand KZ einen hohen Wert erreicht hat, z.B. 300. Dies entspräche einer unzulässig niedrigen Drehzahl des Motors. Falls Nein, geht der Motor zurück zur Stelle E. Falls Ja, wird im Schritt 120 das Signal ALARM (Fig. 3) gesetzt und ggf. gespeichert.

Gelangt nun der Rotor 33 (Fig. 3) zur Drehstellung 360° el, so wird ein Resetsignal R erzeugt, und dieses unterbricht das Programm an irgend einer Stelle zwischen dem Punkt E und dem unteren Ende der Fig. 8, wie im Schritt S124 angegeben. Dabei wird auch - als Teil des Resetvorgangs - im Schritt S126 der Schalter 68 geöffnet, so daß anschließend im Schritt S102 eine Abfrage des Ports P (über die Verbindung 69 der Fig. 6) möglich ist.

In diesem Fall ist der Kondensator 66 geladen, und deshalb gilt P = H d.h. das Programm geht in diesem Fall zum Schritt S128 und führt einen zyklischen Reset durch, bei dem hauptsächlich KZ = 0 gesetzt wird und ggf. die minimale untere Drehzahl erneut decodiert wird.

Anschließend läuft der beschriebene Vorgang erneut ab.

Beim Lauf des Motors 30 wird stets der Schritt S128 durchlaufen, beim Start einmal der Schritt S104. Dies ermöglicht mit höchst einfachen Mitteln eine Differenzierung zwischen Anlauf einerseits und ständigem Lauf des Motors andererseits. Beim zyklischen Resetvorgang des Schrittes S128 bleiben also die anderen Registerinhalte erhalten, z.B. der Registerwert für AVZ, und der Registerwert für ALARM, d.h. diese werden nur beim Einschalten des Motors 30 auf bestimmte Werte eingestellt.

Auf diese Weise erreicht man, daß der Motor 30 sehr sicher gegen Störspannungen ist, die im Betrieb auftreten können. Dies wird gemäß der Erfindung sehr einfach und ohne wesentliche Mehrkosten erreicht.

Naturgemäß sind im Rahmen der vorliegenden Erfindung vielfache Abwandlungen und Modifikationen möglich.

Insbesondere wird verwiesen auf den gesamten Inhalt der europäischen Patentanmeldung 94 118 283.4 vom 21. November 1994. Diese Anmeldung zeigt in den Fig. 19 und 20 ein ausführliches Beispiel für die Berechnungsphase B . Hierauf wird zur Vermeidung von Längen ausdrücklich Bezug genommen.

## Patentansprüche

1. Elektronisch kommutierter Elektromotor mit einem Rotor (14; 33), mit einem zur Steuerung des Elektromotors dienenden Mikroprozessor (18; 40), welcher einen Reseteingang aufweist, dem nach dem Einschalten des Motors ein Power-On-Resetsignal zuführbar ist, mit einer Einrichtung (35) zum Erzeugen von von der Drehstellung des Rotors (14; 33) gesteuerten rotorstellungsabhängigen Resetsignalen (R), welche ebenfalls dem Reseteingang zuführbar sind, und mit einem Speicherelement (66), dessen Zustand durch einen vom Power-On-Resetsignal ausgelösten Resetvorgang veränderbar ist, um durch Abfrage dieses Zustands eine Unterscheidung zwischen einem Power-On-Resetsignal und einem rotorstellungsabhängigen Resetsignal (R) zu ermöglichen und, gesteuert durch die Drehung des Rotors, den Mikroprozessor durch die rotorstellungsabhängigen Resetsignale (R) auf definierte Anfangsbedingungen (Fig. 5: A) zurückzusetzen.

2. Motor nach Anspruch 1, bei welchem das rotorstellungsabhängige Resetsignal (R) von einem Rotorstellungssignal (KOMM) des Motors (30) abgeleitet ist.

3. Motor nach Anspruch 1 oder 2, bei welchem ein Differenzierglied (26; 56) vorgesehen ist, um das Rotorstellungssignal (KOMM) zu differenzieren und in ein rotorstellungsabhängiges Resetsignal (R) umzusetzen.

4. Motor nach einem oder mehreren der Ansprüche 1 bis 3, bei welchem ein Power-On-Resetsignal eine Grund-Initialisierung (S72) und ein rotorstellungsabhängiges Resetsignal (R) eine hiervon verschiedene Initialisierung (S84) auslöst.

5. Motor nach einem oder mehreren der Ansprüche 1 bis 4, bei welchem der Zustand des Speicherelements (66) bei Drehung des Rotors periodisch auffrischbar ist,
und in der Pause zwischen Auffrischvorgängen eine Unterscheidung zwischen Power-On-Resetsignal und rotorstellungsabhängigen Resetsignalen (R) ermöglicht.

6. Motor nach einem oder mehreren der Ansprüche 1 bis 5, bei welchem das Speicherelement einen Kondensator (66) aufweist, dem ein Entladeglied, insbesondere ein Entladewiderstand (67), zugeordnet ist.

7. Motor nach Anspruch 6, bei welchem der Kondensator (66) während bestimmter Berechnungsschritte (Fig. 8: S106 bis S126) über den Mikroprozessor (40) aufladbar ist,
und diese Aufladung mindestens während der Unterscheidung von Resetsignalen unterbrochen wird, um eine Abfrage (Fig. 6: 69) des Ladezustands dieses Kondensators (66) zu ermöglichen.

8. Motor nach einem oder mehreren der Ansprüche 1 bis 7, bei welchem ein rotorstellungsabhängiges Resetsignal (R) eine Unterbrechung eines im Augenblick laufenden Programms bewirkt.

9. Motor nach einem oder mehreren der Ansprüche 1 bis 8, bei welchem ein rotorstellungsabhängiges Resetsignal (R) mindestens nahezu mit einem Kommutierungszeitpunkt des Motors (Fig. 4: 0° el., 360° el.) zusammenfällt.

10. Motor nach einem oder mehreren der Ansprüche 1 bis 9, bei welchem zur Erzeugung eines Power-On-Resetsignals ein Kondensator (58) vorgesehen ist, welcher beim Einschalten des Motors (30) über eine Ladeschaltung (48, 59) aufladbar ist, und dessen Ladespannung bei niedrigen Werten als Power-On-Resetsignal wirksam ist.

11. Verfahren für einen elektronisch kommutierten Motor, welcher einen Rotor (14; 33) und einen zur programmgesteuerten Bestromung des Motors dienenden Mikroprozessor (18) mit einem Reseteingang aufweist, zum Unterscheiden zwischen
- einem dem Reseteingang zugeführten Power-On-Resetsignal und
- einem dem Reseteingang zugeführten rotorstellungsabhängigen Resetsignal (R), das im Betrieb bei mindestens einer vorgegebenen Drehstellung des Rotors erzeugt wird,
mit folgenden Schritten:
a) Der Zustand eines dem Motor zugeordneten Speicherelements (66) wird durch ein beim Einschalten des Motors auftretendes Power-On-Resetsignal in der Weise verändert, daß nachfolgende Resetsignale durch diesen veränderten Zustand als rotorstellungsabhängige Resetsignale (R) unterscheidbar sind;
b) bei jedem Resetsignal wird der Zustand dieses Speicherelements (66) durch den Mikroprozessor (18) abgefragt (S70; S102);
c) abhängig von diesem Zustand wird beim Auftreten eines Resetsignals am Reseteingang des Mikroprozessors (18) zwischen einem Power-On-Resetsignal und einem rotorstellungsabhängigen Resetsignal (R) unterschieden;
d) abhängig vom Resultat der Unterscheidung werden im Mikroprozessor (18) unterschiedliche Prozesse (S72, S84; S104, S128) ausgeführt.

12. Verfahren nach Anspruch 11, bei welchem der veränderte Zustand des Speicherelements (66) nach jeder Abfrage des Speicherelements erfrischt wird (S73; S106).

13. Verfahren nach Anspruch 11 oder 12, bei welchem die rotorstellungsabhängigen Resetsignale (R) von einem zur Kommutierung des Motors dienendes Signal (KOMM) abgeleitet werden.

14. Verfahren nach Anspruch 13, bei welchem die rotorstellungsabhängigen Resetsignale (R) durch Differenzierung eines zur Kommutierung des Elektromotors dienenden Signals (KOMM) erzeugt werden.

15. Verfahren nach Anspruch 13 oder 14, bei welchem nach der Unterscheidung eines rotorstellungsabhängigen Resetsignals (R) ein neuer Kommutierungszyklus des Elektromotors eingeleitet wird.

16. Verfahren nach einem oder mehreren der Ansprüche 11 bis 15, bei welchem das Programm in Module (S74, S76) unterteilt ist, welche jeweils einem bestimmten Drehstellungsbereich des Rotors zugeordnet sind (Fig. 4),
und bei welchem die Drehstellung des Rotors (33), bei welcher ein Resetsignal (R) abgegeben wird, mit einem Drehstellungsbereich zusammenfällt, in dem ein Modul (S76) läuft, das durch einen Resetvorgang unterbrechbar ist.

17. Verfahren nach einem oder mehreren der Ansprüche 11 bis 16, bei welchem das bei einer vorgegebenen Drehstellung des Rotors (33) zugeführte Resetsignal im wesentlichen dieselbe Wirkung auslöst wie ein Kommutierungssignal (KOMM), welches bei normalem Programmablauf im Bereich dieser vorgegebenen Drehstellung des Rotors eine Kommutierung bewirken würde.

## Claims

1. Electronically commutated electric motor with a rotor (14; 33), with a microprocessor (18; 40) serving for control of the electric motor and comprising a reset input to which a power-on reset signal can be fed after the motor is switched on, with a device (35) for production of reset signals (R) which depend on the rotor position and are controlled by the rotary position of the rotor (14; 33) and can also be fed to the reset input, and with a storage element (66) the state of which can be changed by a reset operation triggered by the power-on reset signal in order to permit discrimination between a power-on reset signal and a reset signal (R) depending on the rotor position by interrogation of this state and, controlled by the rotation of the rotor, to reset the microprocessor to defined starting conditions (fig. 5: A) through the reset signals (R) depending on the rotor position.

2. Motor according to claim 1, with which the reset signal (R) depending on the rotor position is derived from a rotor position signal (KOMM) of the motor (30).

3. Motor according to claim 1 or 2, with which a differentiating member (26; 56) is provided in order to differentiate the rotor position signal (KOMM) and convert it into a reset signal (R) depending on the rotor position.

4. Motor according to one or more of claims 1 to 3, with which a power-on reset signal triggers a basic initialisation operation (S72) and a reset signal (R) depending on the rotor position triggers a different initialisation operation (S84).

5. Motor according to one or more of claims 1 to 4, with which the state of the storage element (66) can be refreshed periodically when the rotor turns, and in the pause between refreshing operations allows discrimination between a power-on reset signal and reset signals (R) depending on the rotor position.

6. Motor according to one or more of claims 1 to 5, with which the storage element comprises a capacitor (66) with which is associated a discharging member, in particular a discharging resistor (67).

7. Motor according to claim 6, with which the capacitor (66) can be charged through the microprocessor (40) during certain calculation steps (fig. 8: S106 to S126), and this charging is interrupted at least during the discrimination of reset signals in order to allow sampling (fig. 6: 69) of the state of charge of this capacitor (66).

8. Motor according to one or more of claims 1 to 7, with which a reset signal (R) depending on the rotor position causes an interruption in a programme running at that moment.

9. Motor according to one or more of claims 1 to 8, with which a reset signal (R) depending on the rotor position at least almost coincides with a commutation point of the motor (fig. 4: 0° el., 360° el.).

10. Motor according to one or more of claims 1 to 9, with which for production of a power-on reset signal a capacitor (58) is provided which can be charged through a charging circuit (48, 59) when the motor (30) is switched on, and whose charging voltage is effective as a power-on reset signal at low values.

11. Process for an electronically commutated motor which comprises a rotor (14; 33) and a microprocessor (18) serving for programme-controlled feeding of power to the motor and having a reset input, for discrimination between
- a power-on reset signal fed to the reset input and
- a reset signal (R) depending on the rotor position which is fed to the reset input and is produced in at least one predetermined rotary position of the rotor while in operation,
with the following steps:
a) the state of a storage element (66) associated with the motor is changed by a power-on reset signal appearing when the motor is switched on such that following reset signals can be recognised as reset signals (R) depending on the rotor position through this changed state;
b) with each reset signal the state of this storage element (66) is sampled by the microprocessor (18) (S70; S102);
c) depending on this state, when a reset signal appears at the reset input of the microprocessor (18), a power-on reset signal is distinguished from a reset signal (R) depending on the rotor position;
d) different operations (S72, S84; S104, S128) are carried out in the microprocessor (18) depending on the discrimination result.

12. Process according to claim 11, with which the changed state of the storage element (66) is refreshed after each sampling of the storage element (S73; S106).

13. Process according to claim 11 or 12, with which the reset signals (R) depending on the rotor position are derived from a signal (KOMM) serving for commutation of the motor.

14. Process according to claim 13, with which the reset signals (R) depending on the rotor position are produced by differentiation of a signal (KOMM) serving for commutation of the electric motor.

15. Process according to claim 13 or 14, with which a new commutation cycle of the electric motor is initiated after recognition of a reset signal (R) depending on the rotor position.

16. Process according to one or more of claims 11 to 15, with which the programme is divided into modules (S74, S76) each of which are associated with a particular range of rotary position of the rotor (fig. 4),
and with which the rotary position of the rotor (33) in which a reset signal (R) is emitted coincides with a range of rotary position in which a module (S76) runs which can be interrupted by a reset operation.

17. Process according to one or more of claims 11 to 16, with which the reset signal supplied in a predetermined rotary position of the rotor (33) essentially triggers the same action as a commutating signal (KOMM) which would cause commutation in the range of this predetermined rotary position of the rotor during normal programme operation.

## Revendications

1. Moteur électrique à commutation électronique,
avec un rotor (14 ; 33),
avec un microprocesseur (18 ; 40), qui sert à commander le moteur électrique et qui présente une entrée de « reset » (entrée de remise à l'état initial) à laquelle peut être apporté, à la suite de la mise en service du moteur, un signal de « power-on-reset » (signal de remise à l'état initial au démarrage),
avec un dispositif (35) pour produire des signaux de «reset» (R) dépendants de la position du rotor, commandés par la position de rotation du rotor (14 ; 33), qui peuvent être également apportés à l'entrée de « reset »,
et avec un élément de mémorisation (66), dont l'état peut être modifié par un processus de « reset » déclenché par le signal de « power-on-reset » afin de permettre, par interrogation de cet état, une discrimination entre un signal de « power-on-reset » et un signal de « reset » (R) dépendant de la position du rotor et, sous la commande de la rotation du rotor, de remettre le microprocesseur, par les signaux de « reset » (R) dépendants de la position du rotor, à des conditions initiales définies (figure 5 : A).

2. Moteur selon la revendication 1, dans lequel le signal de « reset » (R) dépendant de la position du rotor est dérivé d'un signal de position du rotor (KOMM) du moteur (30).

3. Moteur selon la revendication 1 ou 2, dans lequel un élément différenciateur (26 ; 56) est prévu pour différencier le signal de position du rotor (KOMM) et le transformer en un signal de « reset» (R) dépendant de la position du rotor.

4. Moteur selon une ou plusieurs des revendications 1 à 3, dans lequel un signal de « power-on-reset » déclenche une initialisation de base (S72), et un signal de « reset » (R) dépendant de la position du rotor déclenche une initialisation (S84) différente de l'initialisation de base.

5. Moteur selon une ou plusieurs des revendications 1 à 4, dans lequel l'état de l'élément de mémorisation (66) peut être périodiquement rafraîchi pendant la rotation du rotor,
et permet, pendant la pause entre les processus de rafraîchissement, une discrimination entre un signal de « power-on-reset » et des signaux de « reset » (R) dépendants de la position du rotor.

6. Moteur selon une ou plusieurs des revendications 1 à 5, dans lequel l'élément de mémorisation présente un condensateur (66), auquel est associé un élément de décharge, notamment une résistance de décharge (67).

7. Moteur selon la revendication 6, dans lequel le condensateur (66) peut, pendant des étapes de calcul déterminées (figure 8 : S106 à 126), être chargé au moyen du microprocesseur (40),
et cette charge est interrompue au moins pendant la discrimination de signaux de « reset », afin de permettre une interrogation (figure 6 : 69) de l'état de charge de ce condensateur (66).

8. Moteur selon une ou plusieurs des revendications 1 à 7, dans lequel un signal de « reset » (R) dépendant de la position du rotor produit une interruption d'un programme momentanément en cours de fonctionnement.

9. Moteur selon une ou plusieurs des revendications 1 à 8, dans lequel un signal de « reset » (R) dépendant de la position du rotor coïncide au moins quasiment avec un instant de commutation du moteur (figure 4 ; 0° el ., 360° el.).

10. Moteur selon une ou plusieurs des revendications 1 à 9, dans lequel est prévu, pour produire un signal de « power-on-reset », un condensateur (58) qui peut être chargé par un circuit de charge (48, 59) lors de la mise en service du moteur (30) et dont la tension de charge est active comme signal de « power-on-reset » à des valeurs faibles.

11. Procédé pour un moteur à commutation électronique qui présente un rotor (14 ; 33) et un microprocesseur (18) servant à alimenter en courant le moteur et pourvu d'une entrée de « reset »,
pour effectuer une discrimination entre
- un signal de « power-on-reset » apporté à l'entrée de « reset » et
- un signal de « reset » (R) dépendant de la position du rotor, apporté à l'entrée de « reset », qui est produit en service à au moins une position prédéfinie de rotation du rotor,
comprenant les étapes suivantes :
a) l'état d'un élément de mémorisation (66) associé au moteur est, par un signal de « power-on-reset » apparaissant à la mise en service du moteur, modifié de telle sorte que des signaux de « reset » consécutifs peuvent, par cet état modifié, être discriminés comme signaux de « reset » (R) dépendants de la position du rotor,
b) à chaque signal de « reset », l'état de cet élément de mémorisation (66) est interrogé (S70 ; S102) par le microprocesseur (18),
c) en fonction de cet état, on effectue, lors de l'apparition d'un signal de « reset » à l'entrée de « reset » du microprocesseur (18), une discrimination entre un signal de « power-on-reset » et un signal de « reset » (R) dépendant de la position du rotor,
d) en fonction du résultat de la différenciation, des processus différents (S72, S84 ; S104, S128) sont exécutés dans le microprocesseur (18).

12. Procédé selon la revendication 11, selon lequel l'état modifié de l'élément de mémorisation (66) est rafraîchi (S73 ; S106) après chaque interrogation de l'élément de mémorisation.

13. Procédé selon la revendication 11 ou 12, selon lequel les signaux de « reset » (R) dépendants de la position du rotor sont dérivés d'un signal (KOMM) servant à la commutation du moteur.

14. Procédé selon la revendication 13, selon lequel les signaux de « reset » (R) dépendants de la position du rotor sont produits par différenciation d'un signal (KOMM) servant à la commutation du moteur électrique.

15. Procédé selon la revendication 13 ou 14, selon lequel un nouveau cycle de commutation du moteur électrique est introduit à la suite de la discrimination d'un signal de « reset » (R) dépendant de la position du rotor.

16. Procédé selon une ou plusieurs des revendications 11 à 15, selon lequel le programme est subdivisé en modules (S74, S76), qui sont chacun associés à une plage déterminée de positions de rotation du rotor (figure 4),
et la position de rotation du rotor (33) à laquelle est délivré un signal de « reset » (R) coïncide avec une plage de positions de rotation dans laquelle fonctionne un module (S76), qui peut être interrompu par un processus de « reset ».

17. Procédé selon une ou plusieurs des revendications 11 à 16, selon lequel le signal de « reset » apporté à une position prédéfinie de rotation du rotor (33) déclenche essentiellement la même action qu'un signal de commutation (KOMM) qui produirait une commutation lors du déroulement normal du programme dans la région de cette position prédéfinie de rotation du rotor.
